# EUROPEAN PATENT SPECIFICATION

(11) **EP 3 933 429 B1**
(45) Date of publication and mention of the grant of the patent: **06.09.2023**
(21) Application number: 20183676.4
(22) Date of filing: 02.07.2020
(51) Int. Cl.: G01S 5/02, G01S 5/10, H04B 7/26, H04W 56/00, G01S 5/12

(54) **TERRESTRIAL LOCALIZATION OF A MOBILE DEVICE**
TERRESTRISCHE ORTUNG EINER MOBILEN VORRICHTUNG
LOCALISATION TERRESTRE D'UN DISPOSITIF MOBILE

(43) Date of publication of application: 05.01.2022
(73) Proprietor: PolTec Solutions Karlsruhe GmbH, 76448 Durmersheim (DE)
(72) Inventor: KROSCHEL, Kristian, 76337 Waldbronn (DE); WILLERSINN, Dieter, 76139 Karlsruhe (DE); HUBER, Reiner, 76448 Durmersheim (DE)
(74) Representative: Grünecker Patent- und Rechtsanwälte PartG mbB

(56) References cited:
- US-A1- 2017 195 109
- US-A1- 2017 324 441
- US-A1- 2020 137 715
- US-A1- 2020 205 115

## Description

### Field of the Invention

The invention refers to techniques of localizing a mobile device of a mobile communications network, in particular, localizing a mobile device by means of a communication between the mobile device and one or more mobile communication network base stations based on signals encoded with orthogonal codes.

### Prior Art

The localization of mobile devices, in particular, ubiquitous mobile phones, is of growing importance. In the art, Global Navigation Satellite Systems, GNSS, in particular, the Global Positioning System, GPS, as well as the Galileo, GLONASS, and BeiDou navigation systems are well-known satellite-based positioning systems. However, these systems, which are, with the exception of Galileo, under military control, suffer from problems with respect to the accuracy of the positioning and interferences and shadowing effects in cultivated areas, in particular, in major cities.

Alternatively, positioning can also be obtained by cell-ID based techniques and Observed Time Difference of Arrival (OTDOA) positioning within mobile communications networks.

US 2017/195109 A1 discloses a method and apparatus for providing improved anchor-anchor clock synchronization. In particular, the skew and offset of a second clock in reference to a first clock is determined based on measured transmit and receive times of at least two two-way transmissions between a first anchor using the first clock and a second anchor using the second clock. US 2017/324441 A1 discloses a wireless communication method in a network comprising a plurality of nodes including ranging masters, broadcasting a chirp-modulated ranging requests, and ranging slaves slave, replying with thereto with chirp-modulated ranging responses, whereby mobile nodes can locate themselves passively by listening to the request/reply exchanges, based on the respective time differences of arrival. US 2020/137715 A1 discloses a methid wherein the position of a user equipment (UE) may be determined using downlink based solutions (e.g. OTDOA), uplink based solutions (e.g. UTDOA), or combined downlink and uplink based solutions (e.g. RTT). The serving gNBs may request neighboring gNBs to produce downlink reference signal transmissions to a target UE and/or measure uplink reference signal transmissions from the target UE. The serving gNB may receive the uplink reference signal measurements from neighboring gNBs and obtain an own uplink reference signal measurement and forward to the UE or another network entity all the uplink reference signal measurements. The UE may use the uplink reference signal measurements, along with the UE's own downlink reference signal measurements to determine RTTs. The serving gNBs or another entity may keep the uplink reference signal measurements and may determine RTTs after receiving the downlink reference signal measurements from the UE.

However, there is no single art that seemlessly provides reliable and accurate positioning in indoor, inner-city, rural and backcountry scenarios. As an example, 5G networks provide relatively accurate localization in indoor and inner-city scenarios, but lack coverage in rural areas and backcountries. GNSS may perform satisfactorily in rural areas and backcountries, but is mostly unavailable indoor. In OTDOA, the positioning techniques of 3G and 4G, for example, the spatial resolution of the localization of a mobile device/station is limited by the temporal chip length of applied spreading codes.

In view of the above, a problem underlying the present invention can be seen in providing techniques for the localization of a mobile device without the need for satellite navigation with an increased reliability and accuracy as compared to the art.

### Description of the Invention

In order to address the above-mentioned problems it is provided provided a plurality of mobile communication network (MCN) base stations that are synchronized with each other according to claim 1. Thus, it is provided a plurality of MCN base stations according to one or more of the above-described embodiments, the plurality of MCN base stations forming a cluster of MCN base stations. One of the MCN base stations is a master (clock) base station the other ones being slave (clock) MCN base stations. The master base station is configured for transmitting a request signal encoded with an orthogonal code and reading the time of transmitting the request signal encoded with an orthogonal code from a counter unit. Each of the slave MCN base stations is configured for transmitting its individual response signal encoded with an orthogonal code upon reception of the request signal encoded with an orthogonal code. The master base station is further configured for receiving the response signals encoded with orthogonal codes. Moreover, the master base station comprises a processing unit configured for determining the arrival times of the response signals encoded with orthogonal codes upon reception of these signals, calculating the round-trip times for all slave base stations.

Furthermore, each of the slave MCN base stations has its own counter unit and is configured for re-transmitting its individual response signal encoded with an orthogonal code after a predetermined time period, and at a predetermined point in time indicated by its own local (slave) clock, for example, the next full second. The processing unit of the master base station is configured for reading the current counter value of its local counter unit at the same predetermined point in time, but indicated by its own (master) clock, for example, the next full second. The master base station is further configured for receiving the re-transmitted response signals encoded with orthogonal codes and the processing unit of the master base station is configured for reading the current counter value of the local counter unit of the master base station upon reception of each re-transmitted response signal, determining the arrival times of the re-transmitted response signals encoded with orthogonal codes, subtracting the counter value of the local counter unit of the master base station previously read after the predetermined time period (and at the predetermined point in time indicated by the master clock, for example the next full second), and further subtracting the calculated travelling times (approximately half the RTTs) of the response signals encoded with orthogonal codes from the determined arrival times of the re-transmitted response signals encoded with orthogonal codes in order to obtain individual time differences between the clock of the master MCN base station and the clocks of each of the slave MCN base stations. The master base station is configured for transmitting to each of the slave MCN base stations data representing the obtained time difference of the clock of the master base station and the clock of the respective slave base station, for example according to a protocol known in the art, and each of the slave MCN base stations is configured for receiving the data signal representing the obtained time difference of the counter unit of the master base station and the counter unit of the slave base station and correcting its counter unit based on that signal, for example according to a protocol known in the art.

Each of the MCN base stations comprises a first receiver unit configured for receiving a first signal encoded with a first orthogonal code from another MCN base station or a mobile device; a localization and positioning/timing unit configured for a) processing, for localizing the mobile device, the first signal encoded with the first orthogonal code comprising determining the time of arrival of the first signal at the MCN base station and b) providing, for localizing the mobile device, a second signal encoded with a second orthogonal code; and a first transmitter unit configured for transmitting the second signal encoded with the second orthogonal code.

Different from the art, the accuracy of the synchronization is not limited by chip temporal lengths but rather the counter resolutions. The counter resolutions can be very high. In fact, counter resolutions in the range of some ten picoseconds are available. Thus, based on such an accurate synchronization of the clocks of the MCN base stations involved in the localization procedure by means of their counter units a localization of the mobile device with a spatial accuracy in the range of cm and below can be obtained. Specific technologies are available in the art, and are referred to as Time-to-Digital conversion techniques.

The first receiver unit of each of the MCN base stations may be further configured for receiving first communication signals from the mobile device and each of the MCN base stations may further comprise a communication unit configured for processing the first communication signals received by the first receiving unit or second communication signals to be transmitted to the mobile device via the first transmitter unit; and a signal processing unit configured for receiving the first signal encoded with a first orthogonal code from the first receiving unit and providing the first signal encoded with a first orthogonal code to the localization and positioning/timing unit, in particular, without equalizing the first signal encoded with a first orthogonal code.

Moreover, each of the MCN base stations may further comprise a second receiving unit different from the first receiving unit and configured for receiving first communication signals from the mobile device and a second transmitter unit different from the first transmitter unit and configured for transmitting second communication signals to the mobile device.

The synchronized MCN base stations can be used in a method of localizing a mobile device.

Thus, it is provided a method of localizing a mobile device in a mobile communication network as defined by claim 4, comprising communicating signals encoded with orthogonal codes between the mobile device and at least three mobile communication network, MCN, base stations of the plurality of MCN base stations described above and processing the communicated signals by the mobile device and/or the at least three MCN base stations for localizing the mobile device wherein the processing comprises determining the time of arrival of at least one of the communicated signals.

According to an embodiment, at least one of the mobile device and the MCN base station receives at least some of the signals encoded with orthogonal codes that are processed for localizing the mobile device with a receiving unit and receives communication signals different from the signals encoded with orthogonal codes that are processed for localizing the mobile device with the same receiving unit; and/or transmits at least some of the signals encoded with orthogonal codes that are processed for localizing the mobile device with a transmitting unit and transmits communication signals different from the signals encoded with orthogonal codes that are processed for localizing the mobile device with the same transmitting unit.

According to another embodiment, at least one of the mobile device and the MCN base station receives at least some of the signals encoded with orthogonal codes that are processed for localizing the mobile device with a first receiving unit and receives communication signals different from the signals encoded with orthogonal codes that are processed for localizing the mobile device with a second receiving unit different from the first receiving unit; and/or transmits at least some of the signals encoded with orthogonal codes that are processed for localizing the mobile device with a first transmitting unit and transmits communication signals different from the signals encoded with orthogonal codes that are processed for localizing the mobile device (MD) with a second transmitting unit different from the first transmitting unit.

The MCN base station may also comprise basic infrastructure for Mobile Network Organisation according to the art, such as a clock. Communication of signals between different MCN base stations for localizing a mobile device (here and in the following description, the mobile device may be a mobile station) may be performed in the context of synchronizing the clocks of the base stations. Synchronizing the clocks of the MCN base stations may be performed in order to reliably obtain arrival times of MCN base station signals by the mobile device in order to localize the mobile device (see detailed description below). The communicated signals may comprise request and response signals as described below.

According to the invention, the localizing of a mobile device is based on signals encoded with orthogonal codes that are, in particular, not equalized before processing for the localization process. As compared to the art, an unprecedented accuracy of the localization can be achieved. Herein, a signal encoded with an orthogonal code can be (represent) the orthogonal code itself. The processing of the signals may comprise determining time differences of arrival of the signals (see description below).

Communication between the MCN base station and the mobile device is performed via an established communication channel. The communication channel serves for communicating the payload as in conventional equipment. The payload may comprise any type of data. Signals carrying the payload used for any type of data may be equalized as it is common in the art. Here and in the following, the first and second communication signals may be encoded with orthogonal codes but are different from the first signal encoded with a first orthogonal code and the second signal encoded with a second orthogonal code that are used for the localization of the mobile device. These first and second signals that are used for the localization of the mobile device may be communicated via the same communication channel as the first and second communication signals. The same receiver and transmitter units can be used for reception and transmission of the first and second signals that are used for the localization of the mobile device and the first and second communication signals.

In the following, particular realizations of techniques of localizing the mobile device are described. For example, the localization may be based on hyperboloid positioning or (tri)lateration positioning. According to different alternatives, the position of the mobile device is calculated by the mobile device itself or an MCN base station.

In the above-described embodiments the clocks of the involved MCN base stations have to be synchronized with each other. The accuracy of the synchronization directly translates to the accuracy of the localization of the mobile device. Therefore, the involved MCN base stations may advantageously be configured for precise synchronization of their clocks which may be achieved by means of counter units comprised in the MCN base stations. It is in this context, that exchanging signals between MCN base stations aims at the localization of a mobile device.

It is noted that by monitoring the clocks of the slave MCN base stations in the above-described manner spoofing with respect to mocked base station identities with unreasonable positions can be reliably discovered.

Since in the above-described example, the position of the mobile device is determined at the mobile device side, the mobile device can calculate its Timing Advance with respect to the involved MCN base stations and may transmit information about the Timing Advance to the MCN base stations. Thus, the Timing Advance does not need to be calculated by each MCN base station.

Furthermore, methods of localizing a mobile device in a mobile communications network are provided according to different embodiments. The methods may be implemented in the above-described MCN base stations and/or mobile devices, respectively, and the above-described MCN base stations and/or mobile devices may be configured to carry out the method steps of these methods.

In order to address the above-mentioned problems it is provided a method of localizing a mobile device in a mobile communication network, comprising communicating signals encoded with orthogonal codes between the mobile device and at least one MCN base station; and processing the communicated signals by the mobile device and/or the at least one MCN base station for localizing the mobile device wherein the processing comprises determining the time of arrival of at least one of the communicated signals.

A communication channel may be established between the mobile device and the at least one base station for communicating payload data different from the signals encoded with orthogonal codes, wherein the signals encoded with orthogonal codes are also communicated via the communication channel. At the reception side the signals encoded with orthogonal codes may be separated from payload data signals and separately processed without equalizing them whereas for example the payload data signals may be equalized before further processing.

According to an embodiment at least one of the mobile devices and the MCN base station receives at least some of the signals encoded with orthogonal codes that are processed for localizing the mobile device (MD) with a receiving unit and receives communication signals different from the signals encoded with orthogonal codes that are processed for localizing the mobile device (MD) with the same receiving unit; and/or transmits at least some of the signals encoded with orthogonal codes that are processed for localizing the mobile device (MD) with a transmitting unit and transmits communication signals different from the signals encoded with orthogonal codes that are processed for localizing the mobile device (MD) with the same transmitting unit.

Alternatively, separate receiving and/or transmitting units for receiving/transmitting the signals encoded with orthogonal codes that are processed for localizing the mobile device are provided in addition to receiving/transmitting units used for the communication of the communication signals that are different from the signals encoded with orthogonal codes that are processed for localizing the mobile device.

Particular realizations of the procedure of localizing the mobile device are given in the following.

According to an embodiment, the mobile device receives (at least) four different signals encoded with orthogonal codes each of which is synchronously transmitted by a different one of (at least) four MCN base stations of a cluster of MCN base stations wherein the mobile device is registered. According to this embodiment, the mobile device further stores the orthogonal codes used by the four MCN base stations and data on the positions of the four MCN base stations. The orthogonal codes used by the four MCN base stations and data on the positions of the four MCN base stations may be stored beforehand or transmitted to the mobile device by a MCN base station with which the mobile device communicates. The mobile device further detects (for example, by means of matched filters provided with the orthogonal codes stored beforehand) the orthogonal codes used by the four MCN base stations from the received four different signals encoded with orthogonal codes. Further, the mobile device determines the arrival times of the received four different signals encoded with orthogonal codes by means of a counter unit and performs hyperbolic positioning based on the determined arrival time differences of the received four different signals encoded with orthogonal codes and the data on the positions of the four MCN base stations in order to localize the mobile device. In this embodiment, it is assumed that the clock of the mobile device is not synchronized with the clocks of the MCN base stations. If it is synchronized with them only three MCN base stations need to be involved in the positioning procedure. Accordingly it is provided another embodiment based on signal exchanges between the mobile device to be localized and three MCN base stations.

According to this other embodiment, the mobile device receives three different signals encoded with orthogonal codes each of which is synchronously transmitted by a different one of three MCN base stations of a cluster of MCN base stations wherein the mobile device is registered. The mobile device further stores the orthogonal codes used by the three MCN base stations and data on the positions of the three MCN base stations and detects the orthogonal codes used by the three MCN base stations from the received three different signals encoded with orthogonal codes. The orthogonal codes used by the three MCN base stations and data on the positions of the three MCN base stations may be stored beforehand or transmitted to the mobile device by a MCN base station with which the mobile device registers. The clock is synchronized with the clocks of the three MCN base stations. Furthermore, the arrival times of the received three different signals encoded with orthogonal codes are determined by means of the counter unit and the mobile device is localized based on the determined arrival times of the received three different signals encoded with orthogonal codes and the data on the positions of the three MCN base stations.

According to another implementation distances of the mobile device to be localized to MCN base stations are determined and based on the known positions of the MCN base stations the mobile device can determine its location. According to this embodiment, the mobile device transmits a first signal encoded with a first orthogonal code and receives three different second signals encoded with second orthogonal codes each of which is transmitted, in response to reception of the first signal encoded with a first orthogonal code, by a different one of three MCN base stations of a cluster of MCN base stations wherein the mobile device is registered. The mobile device further stores orthogonal codes used by the three MCN base stations and data on the positions of the three MCN base stations. The orthogonal codes used by the three MCN base stations and data on the positions of the three MCN base stations may be stored beforehand or transmitted to the mobile device by a MCN base station with which the mobile device registers. Furthermore, the mobile device comprises a detection unit comprising matched filters and detects the orthogonal codes used by the three MCN base stations from the received three different second signals. A counter unit is read out for determining the time of transmission of the first signal encoded with a first orthogonal code. The mobile device determines the arrival times of the received three different second signals encoded with second orthogonal codes and localizes the mobile device based on the time of transmission of the first signal encoded with a first orthogonal code, the determined arrival times of the received three different second signals encoded with second orthogonal codes and the data on the positions of the three MCN base stations.

Moreover, it is provided a method of synchronizing the clocks of the slave MCN base stations of a cluster of MCN base stations with the clock of a master base station of the cluster. This method may be performed as part of the procedure of localizing the mobile device. According to this synchronization method the master base station transmits a request signal encoded with an orthogonal code and reads the time of transmitting the request signal from a counter unit. Each of the slave MCN base stations transmits its individual response signal encoded with an orthogonal code upon reception of the request signal transmitted by the base station. The master base station receives the response signals and detects the individual orthogonal codes of the slave MCN base stations. Moreover, the master base station determines the arrival times of the response signals upon reception of these signals by means of a counter unit and calculates the travelling times of the response based on the time of transmitting the request signal and the determined arrival times of the received response signals.

Each of the slave MCN base stations has its own clock and re-transmits its individual response signal encoded with an orthogonal code after a predetermined time period. Particulary, each slave base station may re-transmit its individual response signal encoded with an orthogonal code at a next predetermined full time period of its local clock (for example, a full second) after the first transmission of its individual response signal. In this case, the master base station reads out the counter value of its own local counter unit at the same predetermined full time period measured by its own local clock. The master base station receives the re-transmitted response signals and reads the current counter value of its local counter unit upon reception of each re-transmitted response signal, respectively. Then, the master base station subtracts the counter value read after the predetermined full time period of its local clock and the calculated travelling times of the response signals encoded with orthogonal codes from counter values read out upon reception of the re-transmitted response signals encoded with orthogonal codes in order to obtain individual time differences between the clock of the master base station and the clocks of each of the slave MCN base stations. The master base station transmits to each of the slave MCN base stations the obtained time clock deviation of the master base station and the respective slave MCN base stations and each of the slave MCN base stations receives its respective clock deviation and corrects its clock accordingly, for example, by using a protocol of the art, for instance, the Precision Time Protocol, PTP.

In all of the above-described embodiments signals encoded with orthogonal codes are used. Where appropriate these signals may be Global Navigation Satellite System, GNSS, in particular, Global Positioning System, GPS messages, for example, but coded with orthogonal codes different from the codes used by the GNSS satellites. Such GNSS messages can at least be used as a backup solution, since they are available in all mobile communications networks. Signals encoded with orthogonal codes can advantageously be reliably detected even if the signal strengths are relatively low..

Furthermore, the named mobile communication network, MCN, may be a Terrestrial Trunked Radio, TETRA, network, in particular, the TETRA-BOS ("Behörden und Organisationen mit Sicherheitsaufgaben") network (BOSnet).

Moreover, it is noted that all of the above-described embodiments of a method of localizing a mobile device can be readily used for tracking the mobile device by periodically or aperiodically localizing the mobile device.

Further features and advantages of the present invention will be described in the following with reference to the figures, which illustrate only examples of embodiments of the present invention. The illustrated and described features may be suitably combined with each other.

### Drawings

Figure 1 illustrates a general configuration of a base station or mobile device of a mobile communications network that can be used in the context of the present invention.
Figure 2 illustrates a cluster of MCN base stations wherein a mobile device that is to be localized is registered.
Figure 3 illustrates a configuration of a slave base station of the cluster of MCN base stations shown in Figure 2.
Figure 4 illustrates a configuration of the master base station of the cluster of MCN base stations shown in Figure 2.
Figure 5 illustrates a configuration of the mobile device registered within the cluster of MCN base stations shown in Figure 2.
Figure 6 illustrates a cluster of MCN base stations comprising a master base station and slave MCN base stations that are to be synchronized with the master base station.
Figure 7 illustrates a configuration of the master base station of the cluster of MCN base stations shown in Figure 6.
Figure 8 illustrates a configuration of a slave base station of the cluster of MCN base stations shown in Figure 6.
Figure 9 illustrates a configuration of the master base station of the cluster of MCN base stations shown in Figure 6.
Figure 10 illustrates a cluster of MCN base stations wherein a mobile device that is to be localized is registered.
Figure 11 illustrates a configuration of a base station of the cluster of MCN base stations shown in Figure 10.
Figure 12 illustrates a configuration of the mobile device registered within the cluster of MCN base stations shown in Figure 10.
Figure 13 illustrates a configuration of a base station comprising antenna pairs for localizing a mobile device not being part of the present invention.

Herein, methods of localizing a mobile device of a mobile communications network by means of a communication between the mobile device and one or more MCN base stations are provided. MCN base stations as well as mobile devices configured for realizing such methods are also provided. The provided techniques of localization of the mobile device (for example, a mobile phone) are based on determined travelling times of communicated signals encoded with orthogonal codes and can be performed without the need for any satellite based communication and provides localization accuracies in the range of cm and below even indoors and in rural areas and backcountries. Possible applications include operation controllers, emergency call localization, autonomous driving, carriage of freight detection, etc.

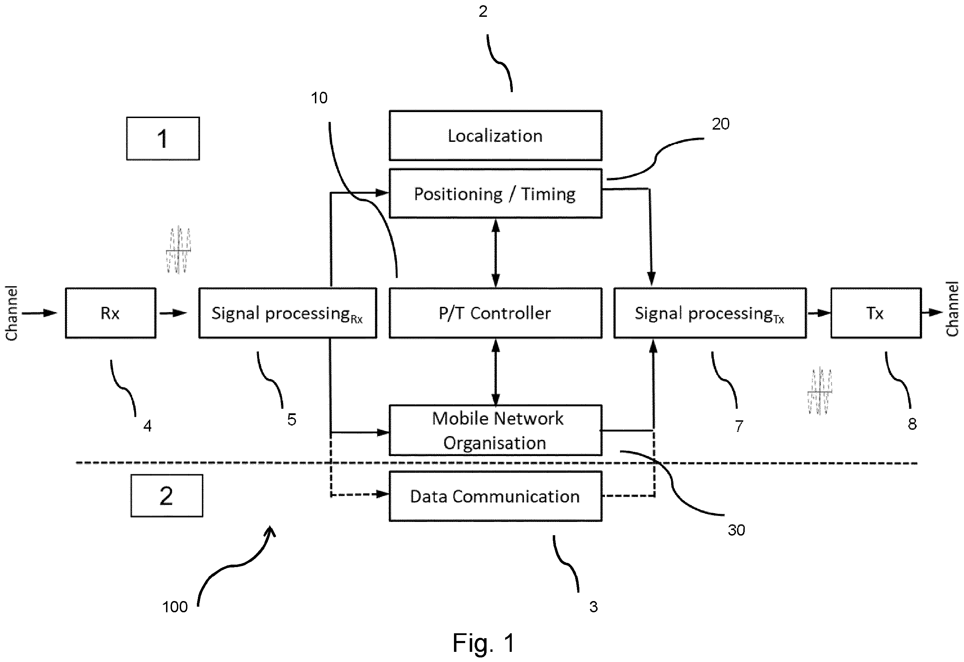

Figure 1 illustrates a configuration of a base station (in this detailed description the term "MCN" is omitted for simplicity) or a mobile station 100 that can be used in the context of the present invention. In this detailed description, a mobile station will occasionally be discussed as an example of a mobile device. The invention is not restricted to such a mobile station and any other kind of mobile device can be used instead. The base station or mobile station 100 comprises a controller 10. The controller 10 is configured for data exchange between a positioning/timing unit 20 and a localization unit 2 on the one side and a mobile network organization unit 30 and/or communication unit 3 on the other side. The positioning/timing unit 20 and the localization unit 2 may be comprised in the above-described localization and positioning/timing unit.

The communication unit 3 is configured for processing communication signals/data. The mobile network organization unit 30 is configured for managing the network access. The positioning/timing unit 20 and localization unit 2 is configured for performing calculations needed for localizing a mobile device, for example, the calculation of time of arrival differences of received signals. The positioning/timing unit 20 comprises a counter unit and is configured for synchronizing clocks (see description below). Moreover, the positioning/timing unit 20 comprises matched filters for the detection of orthogonal codes. It is noted that the positioning/timing unit 20 and the localization unit 2 may be logically separated from each other integrated with each other. The communication unit 3 can be a unit for processing payload signals as it is known in the art.

Reception of signals is performed by a receiver unit 4. The received signals are processed by a receiver-side signal processing unit 5. The receiver-side signal processing unit 5 may comprise a decoding unit for decoding the received signals and, further, may comprise a demultiplex unit for demultiplexing the decoded signals. On the other hand, signals to be transmitted by the base station or the mobile device 100 are processed by a transmitter-side signal processing unit 7. The transmitter-side signal processing unit 7 may comprise a coding unit for encoding signals and a multiplex unit for multiplexing signals. The signals processed by the transmitter-side signal processing unit 7 are transmitted by a transmitter unit 9.

Localizing a mobile device by means of the localization unit 2 and the positioning/timing unit 20 (in particular, used for the synchronization of clocks) is performed based on the communication of signals encoded with orthogonal codes on an established channel. Here and in the following "signals encoded with orthogonal codes" may be the orthogonal codes themselves. The orthogonal codes may be any suitably chosen orthogonal codes known in the art, for example, Gold codes.

According to one alternative (see branch 2 of Figure 1), signals encoded with orthogonal codes and used for the localization of the mobile device and other data signals (particularly, signals carrying payload data) are both received by one and the same receiver unit 4. The signals encoded with orthogonal codes and used for the localization of the mobile device are separated from the other ones by the signal processing unit 5 and supplied to the positioning/timing unit 20 and localization unit 2. The separation may comprise demultiplexing. It is stressed that any equalization of the received signals that is commonly performed in order to enhance the signal quality may only be performed after the separation of the signals encoded with orthogonal codes and used for the localization of the mobile device from the other ones, for example, by the communication unit 3.

According to another alternative (branch 1 in Figure 1; this branch is separated from the communication unit 3), the base station or mobile device 100 is provided with a receiver unit 4 that is configured for only receiving signals on a designated channel used for the localization of the mobile device. Other data signal received on the same channel are received by another receiver unit. It is noted that the receiver unit 4 shown in Figure 1 may comprise two separate receiver units one of which being configured for exclusively receiving the signals used for the localization of the mobile device the other one being configured for receiving payload data (for example, speech or video data). Separate decoding units may be associated with the separate receiver units.

Similarly, according to this alternative two separate transceiver units are provided one of which being configured for transmitting signals in the context of the localization process the other being configured for transmitting other data.

According to different embodiments of the present invention the calculation procedures needed for the localization of the mobile device can be either performed by a MCN base station or the mobile device that is to be localized. In the following, different embodiments representing particular ways of realizing the general configuration of the MCN base station or mobile device 100 shown in Figure 1 are described.

### First Example

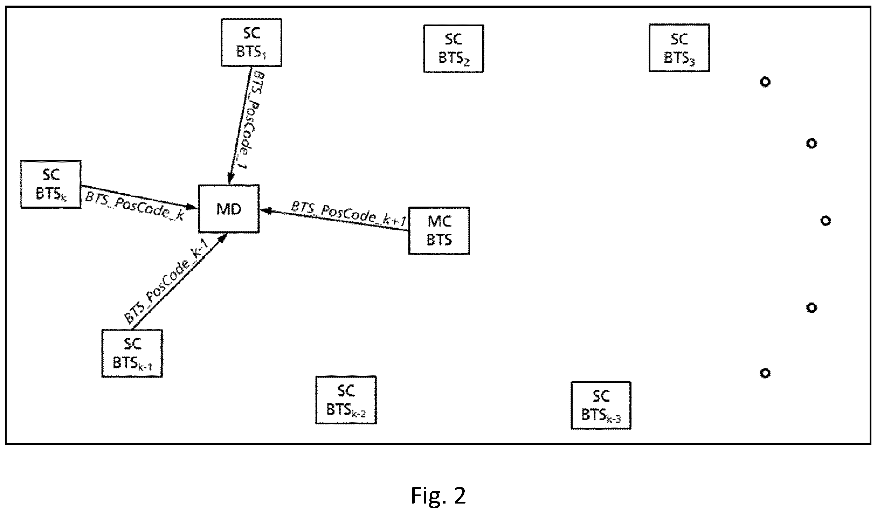

According to the first example, localization of a mobile device that is not synchronized with MCN base stations of a cluster of MCN base stations and receives signals encoded with orthogonal codes from the MCN base stations that are synchronized with each other (i.e., their clocks are synchronized with each other) is performed based on the determination of travelling time differences of the communicated signals. Figure 2 shows slave (SC) MCN base stations SC BTS₁ to SC BTSₖ (or BTS₁ to BTSₖ, for short) and a master (MC) base station BTS of a cluster of MCN base stations. A mobile device MD that is to be localized is registered in the cluster (i.e. with one or more MCN base stations of the cluster). In the following registration in one single cluster of MCN base stations is considered. However, the mobile device MD may be registered with MCN base stations of different clusters. In the latter case, however, inter-cluster synchronicity of the same quality as intra-cluster synchronicity has to be guaranteed.

In the example shown in Figure 2 the mobile device receives signals encoded with orthogonal codes (positioning signals/codes) BTS_PosCode_1, BTS_PosCode_k-1, BTS_PosCode_k and BTS_PosCode_k+1 from four different MCN base stations (in the shown example, three slave MCN base stations BTS₁, BTSₖ, BTSₖ₋₁ and one master base station MC), respectively. Four unsynchronized MCN base stations are needed for the localization of the mobile device according to this example but the mobile device may receive and process signals transmitted from more than four MCN base stations (for redundancy reasons, for example).

The clocks of the slave (clock) MCN base stations SC are synchronized with the clock of the master (clock) base station MC. A procedure of synchronizing the clocks of the slave MCN base stations SC with the clock of the master base station MC will be described later.

The mobile device MD is provided with information about the positions of all of the MCN base stations BTS₁ to BTSₖ of the cluster and also information about orthogonal codes used by the MCN base stations. This information may be stored in a memory of the mobile device MD before any actual registration with a MCN base station. Alternatively, the information about the orthogonal codes and the positions may be sent by a MCN base station to the mobile device MD, for example, in response to a request for registration sent by the mobile device MD, for example, together with the Temporary Mobile Subscriber Identity (TMSI). The thus obtained information is stored in a local memory of the mobile device MD. In the latter case, all of the MCN base stations of the cluster have to be provided with information about the positions of all of the MCN base stations BTS₁ to BTSₖ of the cluster and information about the orthogonal codes used by the MCN base stations BTS₁ to BTSₖ of the cluster. In any case, it should be observed that the mobile device MD is not allowed to register with two MCN base stations that apply the same orthogonal codes. For example, all of the MCN base stations BTS₁ to BTSₖ of the same cluster or of a neighboring cluster apply their individual orthogonal codes that are different from all other orthogonal codes used in the cluster or neighboring clusters. A MCN base station may reject a request for registration when it is informed that the mobile device MD is already registered with a MCN base station that applies the same orthogonal codes.

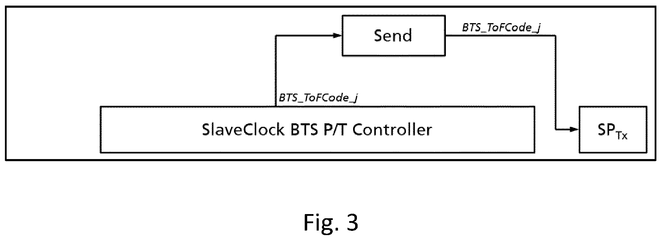

A procedure of localizing the mobile device and exemplary configurations of the involved devices are described with reference to Figures 3 to 5. Figure 3 illustrates a configuration of one of the k slave MCN base stations shown in Figure 2. The slave MCN base station comprises a controller (cf. Figure 1) that is configured to initiate the transmission of a signal encoded with an orthogonal code BTS_PosCodeJ at a predetermined (positioning code transmission) time via a send unit. The signal encoded with an orthogonal code BTS_PosCodeJ may be send multiplexed with signals of the communication channel or on a separate channel (see description of Figure 1). At the same (positioning code transmission) time both the other slave MCN base stations and the master MCN base station correspondingly sent signals encoded with their orthogonal codes. Thus, the signals encoded with orthogonal codes BTS_PosCode_1, BTS_PosCode_k-1 and BTS_PosCode_k shown in Figure 2 are sent by the slave MCN base stations and the signal encoded with orthogonal code BTS_PosCode_k+1 shown in Figure 2 is sent by the master MCN base station at the same time, since the individual clocks of the MCN base stations are synchronized with each other.

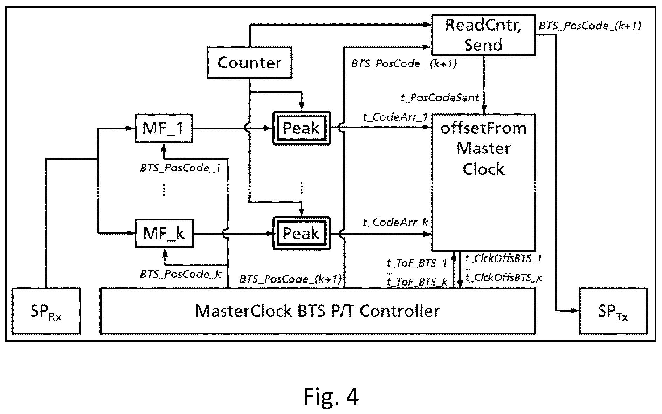

An exemplary configuration of the master MCN base station is shown in Figure 4. The controller of the master MCN base station (cf. Figure 1) initiates the transmission of the orthogonal code BTS_PosCode_k+1 via a send unit at the predetermined (positioning code transmission) time. Other components of the master MCN base station shown in Figure 4 are described later in the context of clock synchronization. As already described with reference to Figure 1 the signals encoded with orthogonal codes, i.e. in this case the orthogonal code BTS_PosCode_k+1 signal, may be sent by the MCN base stations by additional transmitter units or together with the other communication data by the same transmitters.

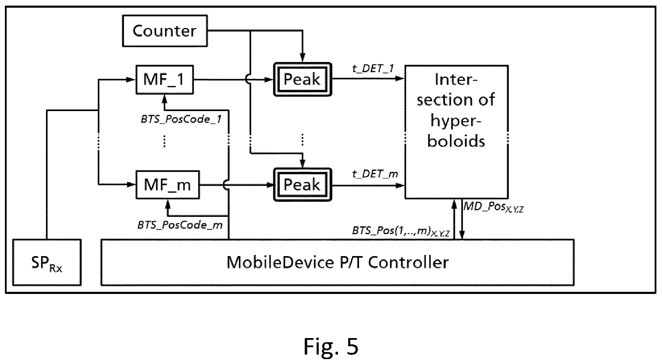

The mobile device MD that is to be localized receives all of the signals encoded with orthogonal codes sent by the MCN base stations (by an additional receiving unit or separated from a data stream, for example, by demultiplexing as described with reference to Figure 1). As it is illustrated in Figure 5 the positioning/timing unit 20 (see Figure 1) of the mobile device comprises matched filters MF_1, .., MF_m and peak detection units for detecting the orthogonal codes of the m received signals encoded with orthogonal codes that are transmitted by the m=4 MCN base stations BTS₁, BTSₖ, BTSₖ₋₁ and MC BTS (note that BTS_PosCode_1, .., BTS_Code_m in Figure 5 correspond to BTS_PosCode_1, BTS_PosCode_k-1 and BTS_PosCode_k and BTS_PosCode_k+1 indicated in Figures 2 and 4). The controller supplies the matched filters MF_1, .., MF_m with the orthogonal codes of all MCN base stations (or at least a sub-set thereof) in order to allow for the detection of the orthogonal codes from the received signals. From the filtered received signals the arrival times t_DET_1, .., t_DET_m of the signals encoded with orthogonal codes can be determined by means of an internal counter of the mobile device.

In this example, the clock of the mobile device is not synchronized with the clocks of the MCN base stations. In order to localize the mobile device hyperbolic positioning based on the differences of the times of arrivals of the signals encoded with orthogonal codes transmitted by the MCN base stations and the known positions of the MCN base station (and the signal travelling velocity, i.e., the speed of light) is, therefore, performed by the mobile device in an intersection of hyperboloids unit. Each of the received signals encoded with orthogonal codes is associated with the position of the respective transmitting MCN base station. As already described above, the information about the positions of all of the MCN base stations of the cluster (BTS_Pos(1, .., m)_{X,Y,Z}) is provided beforehand and supplied by the controller to the intersection of hyperboloids unit. Pairwise differences of the arrival times are calculated. The three-dimensional position of the mobile device MD_Pos_{Z,Y,Z} is obtained by the hyperboloid positioning procedure (which as such is well-known in the art) and provided to the controller of the mobile device. Since the localization of the mobile device is performed at the mobile device side privacy can be kept.

In the above-described example as well as the examples described in the following Global Navigation Satellite System, GNSS, in particular, Global Positioning System, GPS signals/messages may be used, encoded, however, with orthocodes different from the orthocodes use by the GNSS satellites. For example, the MCN base stations transmit periodically GNSS or GPS messages. Alternatively, the GNSS or GPS signals may be additionally transmitted and used for the localizing of the mobile device. GNSS messages already contain information about the satellite position. Dedicated consumer solutions for the reception and interpretation of GNSS are widely available.

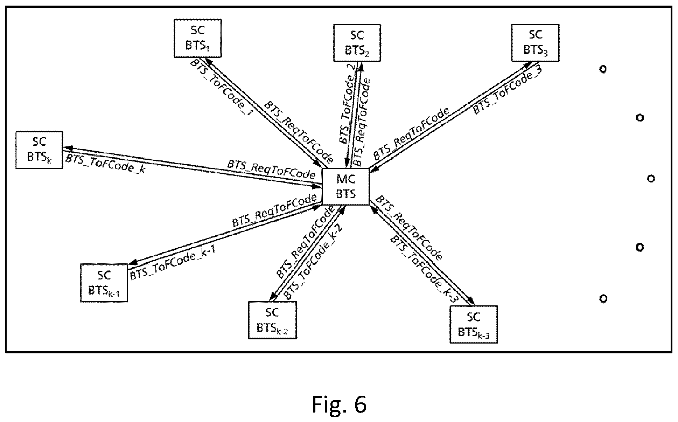

The above-described example allows for localizing a mobile device with a clock that is not synchronized with the clocks of the MCN base stations. However, according to other embodiments the clock of the mobile device can be synchronized with the clocks of the MCN base stations, for example, by a procedure similar to the one that is described below with reference to Figures 6 to 9. In this case not only differences of travelling times can be determined but the travelling times themselves such that three MCN base stations only may be involved in order to localize the mobile device by trilateration positioning, since the position of the mobile device is given by the intersection of three spherical shells formed by locations/points representing equal differences of travelling times. Contrary, if the clock of the mobile device is not synchronized with the ones of the base stations such locations/points lie on hyperboloids.

### Clock Synchronization

In the above-described example, the clocks of the MCN base stations have to be synchronized with each other. In the following, a clock synchronization procedure according to the present invention is described. The clock synchronization procedure comprises the determination of the travelling times of signals communicated between the master MCN base station and the slave MCN base stations. An exemplary cluster of MCN base stations comprising one centrally located master MCN base station MC BTS and a plurality of slave MCN base stations SC BTS₁ to SC BTSₖ is illustrated in Figure 6. The master MCN base station MC BTS requests a response from each of the slave MCN base stations by transmitting a request signal, for example, a signal encoded with an orthogonal code, BTS_ReqToFCode. Upon reception of this signal each of the slave MCN base stations transmits its individual response signal encoded with an orthogonal code BTS_ToFCode_i with 1 ≤ i ≤ k, that is to be received by the master MCN base station MC BTS. For example, each of the slave MCN base stations transmits its individual orthogonal code.

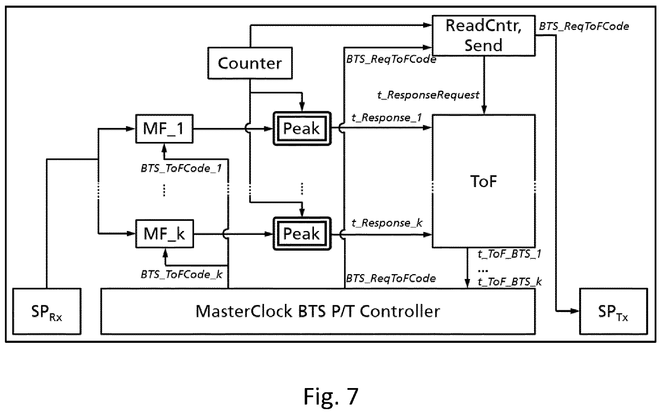

Figure 7 shows a configuration of a master MCN base station MC BTS similar to the one shown in Figure 4. The BTS_ReqToFCode signal is sent via a send unit. The time t_ResponseRequest of transmitting the BTS_ReqToFCode signal is read from a clock of the master MCN base station MC BTS and supplied to a Time of Flight (ToF) processing unit. The positioning/timing unit 20 (see Figure 1) of the master MCN base station comprises matched filters MF_1, .., MF_k for detecting the orthogonal codes of the received signals. The controller supplies the matched filters MF_1, .., MF_k with the orthogonal codes of all slave MCN base stations.

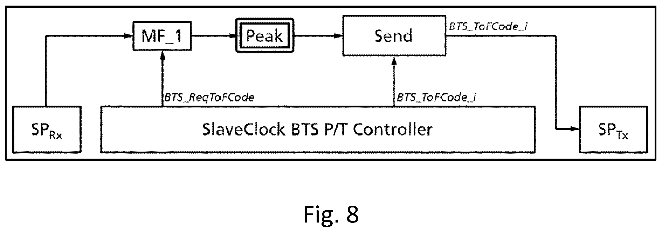

Each of the slave MCN base stations SC BTS₁ to SC BTSₖ detects the orthogonal code of the request signal encoded with an orthogonal code BTS_ReqToFCode transmitted by the master MCN base station and in response transmits a signal encoded with its orthogonal code BTS_ToFCode_i, for example, its orthogonal code as illustrated in Figure 8. The orthogonal codes of the signals BTS_ToFCode_i received form the slave MCN base stations SC BTS₁ to SC BTSₖ are detected by the matched filters MF_1, .., MF_k and peak detection units of the master MCN base station based on the orthogonal codes supplied to the matched filters MF_1, .., MF_k. The respective arrival times t_response_1, .., t_Response_k of the received signals BTS_ToFCode_i are supplied to the ToF processing unit. Based on the time T_ResponseRequest of sending the BTS_ReqToFCode signal and the arrival times t_response_1, .., t_Response_k the travelling times t_ToF_BTS_1, .., t_ToF_BTS_k of the signals BTS_ToFCode_1, .., BTS_ToFCode_k are calculated, for example, based on calibration performed beforehand, and the determined travelling times t_ToF_BTS_1, .., t_ToF_BTS_k are supplied to the controller (see Figure 8).

It is stressed that the accuracy of the thus obtained travelling times of the signals is given by the resolution of the counter. The resolution of the counter can be higher than nanoseconds, for example, some ten picoseconds (in the art referred to as Time-to-Digital Conversion), resulting in an accuracy of the localization of the mobile device in the range of cm or mm (compared to 234 m or 78 m available, for example, by means of a conventional Observed Time Difference Of Arrival (OTDOA) positioning that suffers from limitations due to finite chip temporal lengths).

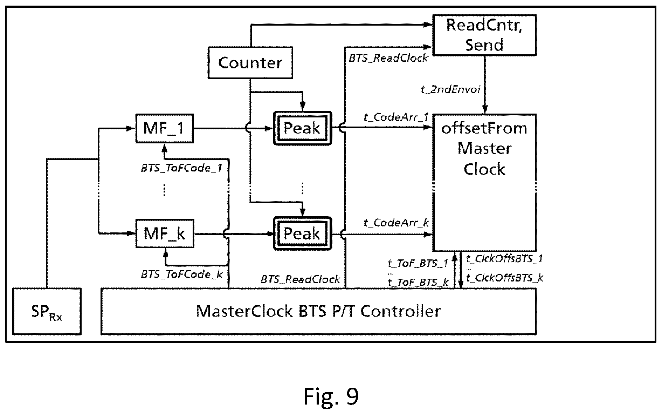

After a predetermined time period (for example, a full time period of, for instance, one or more full seconds) the slave MCN base stations transmit their signals encoded with their BTS_ToFCode_i signals for a second time to the master MCN base station. Each slave MCN base station transmits its signal after the predetermined time period according to its own clock. After the predetermined time period the current counter value t_2ndEnvoi of the local counter unit of the master MCN base station is read by the ReadCntr unit (see Figure 9) in response to a corresponding request BTS_ReadClock sent to the ReadCntr unit of the master MCN base station by the controller. The read counter value t_2ndEnvoi is supplied to the offsetFromMasterClock processing unit.

The arrival times t_CodeArr_i of the BTS_ToFCode_i signals received by the master MCN base station for the second time are read from the counter unit of the master MCN base station and supplied to the offsetFromMasterClock processing unit (see Figure 9). The offset From Master Clock processing unit subtracts the counter value t_2ndEnvoi and the previously determined travelling times t_ToF_BTS_1, .., t_ToF_BTS_k of the received signals BTS_ToFCode_1, .., BTS_ToFCode_k from the arrival times t_CodeArr_i of the re-transmitted BTS_ToFCode_i signals. The resulting differences t_ClckOffsBTS_1, .., t_ClckOffsBTS_1 are supplied to the controller. Information about the respective differences is sent (for example, via the standard communication unit or a separate interface of the positioning/timing unit 20, cf. Figure 1) to each of the slave MCN base stations that can readily correct its clock based on that information.

The above-described synchronization procedure of monitoring of the synchronicity of the clocks of the master MCN base station and the slave MCN base stations with each other can also readily be performed during the localization procedure according to the above-described first example (see Figure 4) as well as during normal communication, for example, on a periodic basis. When the master MCN base station transmits its signal BTS_PosCode_k+1 during the localization procedure according to the first example described above the current counter value t_PosCodeSent is read and supplied to the offsetFromMasterClock processing unit and replaces the t_Response Request (see Figure 7). Besides that the procedure of monitoring the clocks of slave MCN base stations or synchronizing the clocks of the slave MCN base stations with the clock of the master MCN base station during the localization procedure or normal payload data communication is similar to the one described above with reference to Figures 6 to 9. By monitoring the clocks of the slave MCN base stations in this manner spoofing with respect to mocked MCN base station identities can be reliably discovered.

### Second Example

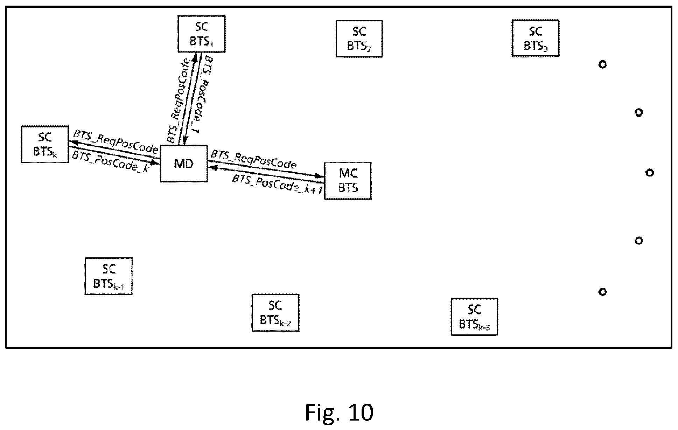

According to the second example, localization of a mobile device that is not synchronized with MCN base stations of a cluster of MCN base stations and receives signals encoded with orthogonal codes from the MCN base stations that are synchronized with each other is performed based on the determination of distances of the mobile device from the MCN base stations. The clocks of the MCN base stations need not to be synchronized with each other, for example, by the procedure described above. Figure 10 shows slave (SC) MCN base stations BTS₁ to BTSₖ and a master (MC) MCN base station BTS of a cluster of MCN base stations. A mobile device MD that is to be localized is registered in the cluster. In the following registration in one single cluster of MCN base stations is considered. However, the mobile device MD may be registered with MCN base stations of different clusters (the master MCN base stations of which need not to be synchronized with each other). Three different MCN base stations (for example, BTS₁, BTSₖ and MC BTS shown in Figure 10) are needed for the localization of the mobile device MD according to this example but the mobile device MD may receive and process signals transmitted by more than three MCN base stations (for redundancy reasons, for example).

The mobile device MD is provided with information about the positions of all of the MCN base stations BTS₁ to BTSₖ and MC BTS of the cluster and also information about orthogonal codes used by the MCN base stations BTS₁ to BTSₖ and MC BTS. This information may be stored in a memory of the mobile device MD before any actual registration with one of the MCN base stations BTS₁ to BTSₖ and MC BTS. Alternatively, the information about the orthogonal codes and the positions may be sent by a MCN base station to the mobile device MD, for example, in response to a request for registration sent by the mobile device MD, for example, together with the Temporary Mobile Subscriber Identity (TMSI). The thus obtained information is stored in a local memory of the mobile device MD. In the latter case, all of the MCN base stations of the cluster have to be provided with information about the positions of all of the MCN base stations BTS₁ to BTSₖ and MC BTS of the cluster and information about the orthogonal codes used by the MCN base stations BTS₁ to BTSₖ and MC BTS of the cluster. In any case, it should be observed that the mobile device MD is not allowed to register with two MCN base stations that apply the same orthogonal codes. For example, all of the MCN base stations BTSBTSof the same cluster or of neighbored cluster apply their individual orthogonal codes that are different from all other orthogonal codes used by MCN base stations in the cluster or neighbored clusters. A MCN base station may reject a request for registration when it is informed that the mobile device MD is already registered with a MCN base station that applies the same orthogonal codes.

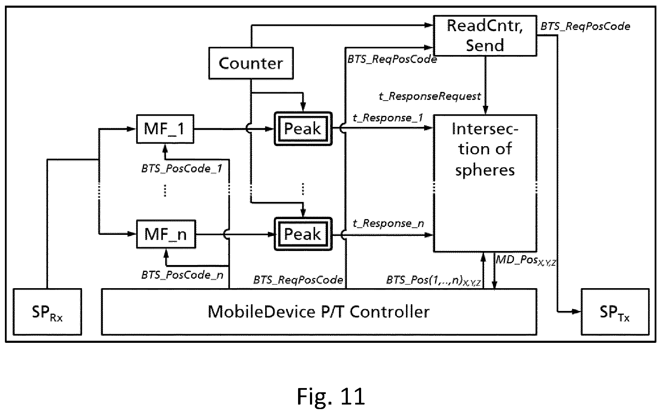

In principle, the determination of the distances between the mobile device MD and the MCN base stations (for example, BTS₁, BTSₖ and MC BTS) is performed similar to the determination of the differences of travelling times of signals described above with reference to Figures 6 to 8 in the context of clock synchronization. The mobile device MD transmits a request signal, for example, a signal encoded with an orthogonal code, BTS_ReqPosCode to the three MCN base stations BTS₁, BTSₖ and MC BTS and, in response, receives signals encoded with orthogonal codes (positioning signals/codes) BTS_PosCode_1, BTS_PosCode_k and BTS_PosCode_k+1 from the n=3 MCN base stations BTS₁, BTSₖ and MC BTS, respectively (see Figure 11 wherein BTS_PosCode_1, .., BTS_Code_n in Figure correspond to BTS_PosCode_1, BTS_PosCode_k and BTS_PosCode_k+1 indicated in Figure 10).

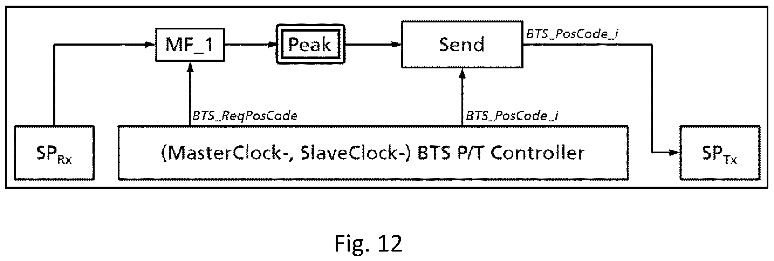

For example, the BTS_ReqPosCode signal is an orthogonal code that is detected by the MCN base stations BTS₁, BTSₖ and MC BTS by means of a matched filter unit and peak detection unit as shown in Figure 12. In response to the reception of the signal BTS_ReqPosCode signal each MCN base station transmits via a send unit its BTS_PosCode_i signal.

When the BTS_ReqPosCode signal is sent by the mobile device the counter unit of the mobile device is read and the read current counter value t_ResponseRequest is supplied to the intersection of spheres processing unit of the mobile device (see Figure 12). The orthogonal codes of the MCN base stations can be detected by the matching filters and peak detection units of the mobile device since they are provided beforehand. Upon reception of the BTS_PosCode_i signals sent by the MCN base stations the counter is read and the respective arrival times t_response_1, .., t_Response_k are supplied to the intersection of spheres processing unit of the mobile device. Similar to the orthogonal codes of the MCN base stations the positions BTS_Pos(1, .., n)_{X,Y,Z} of the MCN base stations are also provided to the controller of the mobile device beforehand and are supplied to the intersection of spheres processing unit by the controller. Based on the determined arrival times t_response_1, .., t_Response_k, the time t_ResponseRequest of sending the request signal BTS_ReqPosCode to the MCN base stations, the positions of the MCN base stations BTS_Pos(1, .., n)_{X,Y,Z} and the speed of light (as the travelling speed of the signals that has to be multiplied by the differences between the respective arrival times t_response_1, .., t_Response_k and t_ResponseRequest) the position of the mobile device can be determined.

The above-described synchronization procedure or monitoring of the synchronicity of the clocks of the master MCN base station and the slave MCN base stations with each other can also readily be performed during the localization procedure according to this example or normal payload data communication and, thus, also used for discovering spoofing attempts. Both in the first and second examples the reliability of the spoofing detection can be further enhanced by providing one or more of the slave MCN base stations with additional matched filters and peak detection units in order to detect signals encoded with orthogonal codes from other slave MCN base stations or the master MCN base station and monitoring the thus detected orthogonal codes. Abrupt changes of these codes would indicate a risk of spoofing being encountered.

In all of the above-described examples the mobile device is enabled to determine its distance to any of the involved MCN base station. Thus, it can determine its Timing Advance corresponding to the time needed for a signal transmitted by the mobile device to be received by the MCN base station. This Timing Advance, therefore, has not to calculated by the MCN base station and transmitted from the MCN base station to the mobile device according to the described examples.

### Third Example

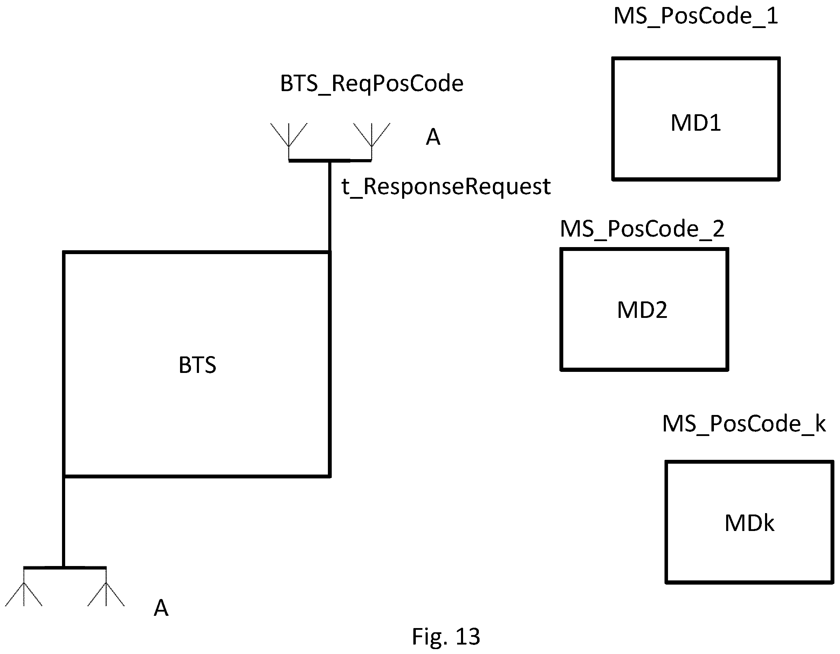

In the above-described examples the involved MCN base stations span a three-dimensional space for localizing one or more mobile devices. According to another example not being part of the invention, localization of one or more mobile devices MD₁, .., MDₖ is performed by means of one or more MCN base stations BS each of which comprises two or more antenna pairs (see Figure 13). Two antenna pairs span a spatial plane and three antenna pairs span a three-dimensional space. The larger the distances of the individual antennas A of each pair to each other are, the higher is the accuracy of the localization of the one or more mobile devices MD₁, .., MDₖ. It is noted that all or some of the antenna pairs may share a common antenna.

According to this example, all of the antennas of the one or more MCN base stations are configured for detecting orthogonal codes of signals encoded with orthogonal codes (the signals may represent orthogonal codes). Encoded signals can be transmitted via at least one of the antennas (transmission antenna) of the at least one MCN base station BS to the one or more mobile devices MD₁, .., MDₖ.

In principle, localization of the one or more mobile devices MD₁, ..., MDₖ can be performed based on the determination of travelling time differences of communicated signals similar to the procedure described with reference to Figures 6 to 9 (see also Figures 10 to 12). The calculation of the travelling time differences is, however, performed by the MCN base station BS rather than a mobile device that is to be localized. As compared to the configuration shown in Figure 6, in the example shown in Figure 13 the MCN base station BS functionally replaces the master MCN base station and the one or more mobile devices MD₁, .., MDₖ functionally replace the slave MCN base stations with regard to transmitting a request signal and response signals.

The MCN base station transmits a request signal, for example, a signal encoded with an orthogonal code (for example, the orthogonal code) BTS_ReqPosCode and reads out its counter in order to store the current counter value t_ResponseRequest of transmission of the request signal (confer Figure 7). In response to the reception and detection of the BTS_ReqPosCode signal each mobile device transmits an individual signal encoded with its orthogonal code MD_PosCode_i with 1 ≤ i ≤ k, for example, each of the mobile devices MD₁, .., MDₖ transmits its orthogonal code. Upon reception of the MD_PosCode_i signals the MCN base stations reads out its counter (i.e., k times) and stores the read counter values t ToF_MD_i AntennaJ where j denotes the individual antennas. Lateration or trilateration positioning based on the read counter values, speed of light, the know positions of the (pairs of antennas) allows for determining the distances of the mobile devices MD₁, .., MDₖ to the MCN base stations and, thus, the localization of the mobile devices. All positions of the mobile devices MD₁, .., MDₖ can be determined by the BS in parallel simultaneously.

It is noted that according to this example the MCN base station BS may not be necessarily stationary but rather can be mobile. For example, the MCN base station BS may be incorporated in a vehicle. If the MCN base station BS is mobile, the position of the same (and the antennas A) has to be independently determined and the accuracy of the localization of the one or more mobile devices MD₁, .., MDₖ depends on the accuracy of the localization of the mobile MCN base station BS (its antennas A).

All of the components of the MCN base stations and the mobile devices described above can be implemented in hardware and/or software as it is considered suitable. Moreover, units that are differently named with respect to their operations may be implemented in a single unit where appropriate. The order of procedural steps may be varied suitably.

The described embodiments are exemplary and not intended to be limiting. The full scope of the invention is defined in the appended claims.

## Claims

1. A plurality of mobile communication network, MCN, base stations (100) each of which comprises
a first receiver unit (4) configured for receiving a first signal encoded with a first orthogonal code from another MCN base station or a mobile device;
a localization and positioning/timing unit (2, 20) configured for a) processing, for localizing the mobile device, the first signal encoded with the first orthogonal code comprising determining the time of arrival of the first signal at the MCN base station and b) providing, for localizing the mobile device, a second signal encoded with a second orthogonal code; and
a first transmitter unit (8) configured for transmitting the second signal encoded with the second orthogonal code;
the MCN base stations forming a cluster of MCN base stations, one of which being a master base station (MC BTS) the other ones being slave MCN base stations (SC BTS₁, .., SC BTSₖ); wherein
the master base station (MC BTS) is configured for transmitting a request signal encoded with an orthogonal code (BTS_ReqToFCode) and reading the time (t_ResponseRequest) of transmitting the request signal encoded with an orthogonal code (BTS_ReqToFCode) from a counter unit;
wherein the plurality of mobile communication network base stations is **characterised in that**:
each of the slave MCN base stations (SC BTS₁, .., SC BTSₖ) is configured for transmitting its individual response signal encoded with an orthogonal code (BTS_ToFCode_i) upon reception of the request signal encoded with an orthogonal code (BTS_ReqToFCode); the master base station (MC BTS) is configured for receiving the response signals encoded with orthogonal codes (BTS_ToFCode_i) from the slave MCN base stations (SC BTS₁, .., SC BTSₖ);
the master base station (MC BTS) comprises a processing unit configured for
determining the arrival times (t_Response_1, .., t_Response_k) of the response signals encoded with orthogonal codes (BTS_ToFCode_i) upon reception of these signals;
calculating the round-trip-times, and from the round-trip-times, the travelling times (t_ToF_BTS_1, .., t_ToF_BTS_k) of the response signals encoded with orthogonal codes (BTS_ToFCode_i) based on the time (t_ResponseRequest) of transmitting the request signal encoded with an orthogonal code (BTS_ReqToFCode) and the determined arrival times (t_Response_1, .., t_Response_k) of the received response signals encoded with orthogonal codes (BTS_ToFCode_i);
and wherein
each of the slave MCN base stations (SC BTS₁, .., SC BTSₖ) has its own counter unit and is configured for re-transmitting its individual response signal encoded with an orthogonal code (BTS_ToFCode_i) after a predetermined time period, and at a predetermined point in time indicated by its local clock;
the master base station (MC BTS) is configured for receiving the re-transmitted response signals encoded with orthogonal codes (BTS_ToFCode_i);
the processing unit of the master base station (MC BTS) is configured for
reading the current counter value (t_2ndEnvoi) of the local counter unit of the master base station (MC BTS) after the predetermined time period, and at the predetermined point in time, indicated by the local clock of the master base station (MC BTS);
determining the arrival times (t_CodeArr_1, .., t_CodeArr_k) of the re-transmitted response signals encoded with orthogonal codes (BTS_ToFCode_i) upon reception of these signals by means of the counter unit of the master MCN base stations (MC BTS);
subtracting the counter value (t_2ndEnvoi) of the local counter unit of the master base station (MC BTS) read at the predetermined point in time indicated by the clock of the master base station (MC BTS) and the calculated travelling times (t_ToF_BTS_1, .., t_ToF_BTS_k) of the response signals encoded with orthogonal codes (BTS_ToFCode_i) from the determined arrival times (t_CodeArr_1, .., t_CodeArr_k) of the re-transmitted response signals encoded with orthogonal codes (BTS_ToFCode_i) in order to obtain individual time differences between the clock of the master base station (MC BTS) and the clock of each of the slave MCN base stations (SC BTS₁, .., SC BTSₖ); and wherein
the master base station (MC BTS) is configured for transmitting to each of the slave MCN base stations (SC BTS₁, .., SC BTSₖ) data representing the obtained time difference of the clock of the master base station (MC BTS) and the clock of the respective slave base station (SC BTS₁, .., SC BTSₖ); and
each of the slave MCN base stations (SC BTS₁, .., SC BTSₖ) is configured for receiving the data representing the obtained time difference of the clock of the master base station (MC BTS) and the clock of the slave base station (SC BTS₁, .., SC BTSₖ) and correcting its clock based on that signal.

2. The plurality of MCN base stations (100) according to claim 1, wherein in each of the plurality of MCN base stations (100):
the first receiver unit (4) is further configured for receiving first communication signals from the mobile device;
and each of the MCN base stations (100) further comprises
a communication unit (3) configured for processing the first communication signals received by the first receiving unit (4) or second communication signals to be transmitted to the mobile device via the first transmitter unit (8); and
a signal processing unit (5) configured for receiving the first signal encoded with a first orthogonal code from the first receiving unit (4) and providing the first signal encoded with a first orthogonal code to the localization and positioning/timing unit (2, 20), in particular, without equalizing the first signal encoded with a first orthogonal code.

3. The plurality of MCN base stations (100) according to claim 1, wherein each of the MCN base stations (100) further comprises
a second receiving unit different from the first receiving unit (4) and configured for receiving first communication signals from the mobile device; and
a second transmitter unit different from the first transmitter unit (8) and configured for transmitting second communication signals to the mobile device.

4. Method of localizing a mobile device (MD) in a mobile communication network, comprising
communicating signals encoded with orthogonal codes between the mobile device (MD) and at least three mobile communication network, MCN, base stations (BS) of the plurality of MCN base stations according to claim 1; and
processing the communicated signals by the mobile device (MD) and/or the at least three MCN base stations (BS) for localizing the mobile device (MD) wherein the processing comprises determining the time of arrival of at least one of the communicated signals, wherein the at least three mobile communication network, MCN, base stations are forming a cluster of MCN base stations, one of which being a master base station (MC BTS) the other ones being slave MCN base stations (SC BTS1, .., SC BTSk);
wherein of the the method further comprises:
the master base station (MC BTS) transmits a request signal encoded with an orthogonal code (BTS_ReqToFCode) and reads the time (t_ResponseRequest) of transmitting the request signal encoded with an orthogonal code (BTS_ReqToFCode) from a counter unit;
each of the slave MCN base stations (SC BTS1, .., SC BTSk) transmits its individual response signal encoded with an orthogonal code (BTS_ToFCode_i) upon reception of the request signal encoded with an orthogonal code (BTS_ReqToFCode);
the master base station (MC BTS) receives the response signals encoded with orthogonal codes (BTS_ToFCode_i) from the slave MCN base stations (SC BTS1, .., SC BTSk);
a processing unit of the master base station (MC BTS) determines the arrival times (t_Response_1, .., t_Response_k) of the response signals encoded with orthogonal codes (BTS_ToFCode_i) upon reception of these signals, and calculates the round-trip-times, and from the round-trip-times, the travelling times (t_ToF_{_}BTS_1, .., t_ToF_BTS_k) of the response signals encoded with orthogonal codes (BTS_ToFCode_i) based on the time (t_ResponseRequest) of transmitting the request signal encoded with an orthogonal code (BTS_ReqToFCode) and the determined arrival times (t_Response_1, .., t_Response_k) of the received response signals encoded with orthogonal codes (BTS_ToFCode_i);
the method being **characterised in** the following steps:
each of the slave MCN base stations (SC BTS1, .., SC BTSk) retransmits its individual response signal encoded with an orthogonal code (BTS_ToFCode_i) after a predetermined time period, and at a predetermined point in time indicated by its local clock;
the master base station (MC BTS) receives the re-transmitted response signals encoded with orthogonal codes (BTS_ToFCode_i);
the processing unit of the master base station (MC BTS) reads the current counter value (t_2ndEnvoi) of the local counter unit of the master base station (MC BTS) after the predetermined time period, and at the predetermined point in time, indicated by the local clock of the master base station (MC BTS), determines the arrival times (t_CodeArr_1, .., t_CodeArr_k) of the re-transmitted response signals encoded with orthogonal codes (BTS_ToFCode_i) upon reception of these signals by means of the counter unit of the master MCN base stations (MC BTS), subtracts the counter value (t_2ndEnvoi) of the local counter unit of the master base station (MC BTS) read at the predetermined point in time indicated by the clock of the master base station (MC BTS) and the calculated travelling times (t_ToF_BTS_1, .., t_ToF_BTS_k) of the response signals encoded with orthogonal codes (BTS_ToFCode_i) from the determined arrival times (t_CodeArr_1, .., t_CodeArr_k) of the re-transmitted re-sponse signals encoded with orthogonal codes (BTS_ToFCode_i) in order to obtain individual time differences between the clock of the master base station (MC BTS) and the clock of each of the slave MCN base stations (SC BTS1, .., SC BTSk);
and the master base station (MC BTS) transmits to each of the slave MCN base stations (SC BTS1, .., SC BTSk) data representing the obtained time difference of the clock of the master base station (MC BTS) and the clock of the respective slave base station (SC BTS1, .., SC BTSk);
and each of the slave MCN base stations (SC BTS1, .., SC BTSk) receives the data representing the obtained time difference of the clock of the master base station (MC BTS) and the clock of the slave base station (SC BTS1, .., SC BTSk) and corrects its clock based on that signal.

## Patentansprüche

1. Eine Mehrzahl von Basisstationen (100) eines mobilen Kommunikationsnetzes, MCN, von denen jede umfasst
eine erste Empfängereinheit (4), die dazu ausgebildet ist, ein erstes Signal, das mit einem ersten orthogonalen Code codiert ist, von einer anderen MCN-Basisstation oder einem Mobilgerät zu empfangen;
eine Lokalisierungs- und Positionierungs-/Zeitsteuerungseinheit (2, 20), die a) zur Verarbeitung des mit dem ersten orthogonalen Code codierten ersten Signals zur Lokalisierung des Mobilgeräts, die Bestimmung der Ankunftszeit des ersten Signals an der MCN-Basisstation umfassend, und b) zum Bereitstellen eines zweiten Signals, das mit einem zweiten orthogonalen Code codiert ist, zur Lokalisierung des Mobilgeräts ausgebildet ist; und
eine erste Sendeeinheit (8), die dazu ausgebildet ist, das zweite Signal, das mit dem zweiten orthogonalen Code codiert ist, zu senden;
wobei die MCN-Basisstationen ein Cluster von MCN-Basisstationen bilden, von denen eine eine Master-Basisstation (MC BTS) ist und die anderen Slave-MCN-Basisstationen (SC BTS₁, ..., SC BTSₖ) sind; wobei
die Master-Basisstation (MC BTS) dazu ausgebildet ist, ein mit einem orthogonalen Code (BTS_ReqToFCode) codiertes Anforderungssignal zu senden und die Zeit (t_ResponseRequest) des Sendens des mit einem orthogonalen Code (BTS_ReqToFCode) codierten Anforderungssignals aus einer Zählereinheit auszulesen;
wobei die Mehrzahl von Basisstationen (100) eines mobilen Kommunikationsnetzes **dadurch gekennzeichnet ist, dass**
jede der Slave-MCN-Basisstationen (SC BTS₁, ..., SC BTSₖ) dazu ausgebildet ist, ihr individuelles Antwortsignal, das mit einem orthogonalen Code (BTS_ToFCode_i) codiert ist, beim Empfang des mit einem orthogonalen Code (BTS_ReqToFCode) codierten Anforderungssignals zu senden;
die Master-Basisstation (MC BTS) dazu ausgebildet ist, die mit orthogonalen Codes (BTS_ToFCode_i) codierten Antwortsignale von den Slave-MCN-Basisstationen (SC BTS₁, ..., SC BTSₖ) zu empfangen;
die Master-Basisstation (MC BTS) eine Verarbeitungseinheit umfasst, die ausgebildet ist zur
Bestimmung der Ankunftszeiten (t_Response_1, ..., t_Response_k) der mit orthogonalen Codes (BTS_ToFCode_i) codierten Antwortsignale beim Empfang dieser Signale;
Berechnung der Umlaufzeiten und aus den Umlaufzeiten der Laufzeiten (t_ToF_BTS_1, ... t_ToF_BTS_k) der mit orthogonalen Codes (BTS_ToFCode_i) codierten Antwortsignale auf der Grundlage der Zeit (t_ResponseRequest) des Sendens des mit einem orthogonalen Code (BTS_ReqToFCode) codierten Anforderungssignals und der bestimmten Ankunftszeiten (t_Response_1, ..., t_Response_k) der mit orthogonalen Codes (BTS_ToFCode_i) codierten empfangenen Antwortsignale;
und wobei
jede der Slave-MCN-Basisstationen (SC BTS₁, ..., SC BTSₖ) ihre eigene Zählereinheit hat und dazu ausgebildet ist, ihr individuelles Antwortsignal, das mit einem orthogonalen Code (BTS_ToFCode_i) codiert ist, nach einer vorbestimmten Zeitdauer und zu einem vorbestimmten Zeitpunkt, der durch ihre lokale Uhr angegeben wird, erneut zu senden;
die Master-Basisstation (MC BTS) dazu ausgebildet ist, die mit orthogonalen Codes (BTS_ToFCode_i) kodierten erneut gesendeten Antwortsignale zu empfangen;
die Verarbeitungseinheit der Master-Basisstation (MC BTS) ausgebildet ist zum
Lesen des aktuellen Zählerwerts (t_2ndEnvoi) der lokalen Zählereinheit der Master-Basisstation (MC BTS) nach der vorbestimmten Zeitdauer und zu dem vorbestimmten Zeitpunkt, der durch die lokale Uhr der Master-Basisstation (MC BTS) angegeben wird;
Bestimmen der Ankunftszeiten (t_CodeArr_1, ..., t_CodeArr_k) der erneut gesendeten Antwortsignale, die mit orthogonalen Codes (BTS_ToFCode_i) codiert sind, beim Empfang dieser Signale mittels der Zählereinheit der MCN-Master-Basisstationen (MC BTS);
Subtrahieren des Zählerwerts (t_2ndEnvoi) der lokalen Zählereinheit der Master-Basisstation (MC BTS), der zu dem durch die Uhr der Master-Basisstation (MC BTS) angegebenen vorbestimmten Zeitpunkt gelesen wird, und der berechneten Laufzeiten (t_ToF_BTS_1, ..., t_ToF_BTS_k) der mit orthogonalen Codes (BTS_ToFCode_i) codierten Antwortsignale von den bestimmten Ankunftszeiten (t_CodeArr_1, .., t_CodeArr_k) der mit orthogonalen Codes (BTS_ToFCode_i) codierten erneut gesendeten Antwortsignale, um individuelle Zeitdifferenzen zwischen der Uhr der Master-Basisstation (MC BTS) und der Uhr jeder der Slave-MCN-Basisstationen (SC BTS₁, ..., SC BTSₖ) zu erhalten; und wobei
die Master-Basisstation (MC BTS) dazu ausgebildet ist, zu jeder der Slave-MCN-Basisstationen (SC BTS₁, ..., SC BTSₖ) Daten zu senden, die die erhaltene Zeitdifferenz zwischen der Uhr der Master-Basisstation (MC BTS) und der Uhr der jeweiligen Slave-Basisstation (SC BTS₁, ..., SC BTSₖ) darstellen; und
jede der Slave-MCN-Basisstationen (SC BTS₁, ..., SC BTSₖ) dazu ausgebildet ist, die Daten zu empfangen, die die erhaltene Zeitdifferenz zwischen der Uhr der Master-Basisstation (MC BTS) und der Uhr der Slave-Basisstation (SC BTS₁, ..., SC BTSₖ) darstellen, und ihre Uhr auf der Grundlage dieses Signals zu korrigieren.

2. Die Mehrzahl von MCN-Basisstationen (100) gemäß Anspruch 1, wobei in jeder der Mehrzahl von MCN-Basisstationen (100):
die erste Empfangseinheit (4) weiterhin dazu ausgebildet ist, erste Kommunikationssignale von dem Mobilgerät zu empfangen;
und jede der MCN-Basisstationen (100) weiterhin umfasst
eine Kommunikationseinheit (3), die dazu ausgebildet ist, die von der ersten Empfangseinheit (4) empfangenen ersten Kommunikationssignale oder zweite Kommunikationssignale, die über die erste Sendeeinheit (8) an das Mobilgerät zu senden sind, zu verarbeiten; und
eine Signalverarbeitungseinheit (5), die dazu ausgebildet ist, das erste Signal, das mit einem ersten orthogonalen Code codiert ist, von der ersten Empfangseinheit (4) zu empfangen und das erste Signal, das mit einem ersten orthogonalen Code codiert ist, an die Lokalisierungs- und Positionierungs-/Zeitsteuerungseinheit (2, 20), insbesondere ohne das erste Signal, das mit einem ersten orthogonalen Code codiert ist, zu entzerren, zu liefern.

3. Die Mehrzahl von MCN-Basisstationen (100) gemäß Anspruch 1, wobei jede der MCN-Basisstationen (100) weiterhin umfasst
eine zweite Empfangseinheit, die von der ersten Empfangseinheit (4) verschieden ist, und dazu ausgebildet ist, erste Kommunikationssignale von dem mobilen Gerät zu empfangen; und
eine zweite Sendeeinheit, die von der ersten Sendeeinheit (8) verschieden ist, und dazu ausgebildet ist, zweite Kommunikationssignale an das Mobilgerät zu senden.

4. Verfahren zur Lokalisierung eines Mobilgeräts (MD) in einem mobilen Kommunikationsnetz, umfassend
Übertragen von Signalen, die mit orthogonalen Codes codiert sind, zwischen der mobilen Vorrichtung (MD) und mindestens drei Basisstationen (BS) des mobilen Kommunikationsnetzes, MCN, aus der Mehrzahl von MCN-Basisstationen gemäß Anspruch 1; und
Verarbeiten der übertragenen Signale durch die mobile Vorrichtung (MD) und/oder die mindestens drei MCN-Basisstationen (BS) zum Lokalisieren der mobilen Vorrichtung (MD), wobei das Verarbeiten Bestimmen der Ankunftszeit von mindestens einem der übertragenen Signale umfasst,
wobei die mindestens drei Basisstationen des mobilen Kommunikationsnetzes, MCN, ein Cluster von MCN-Basisstationen bilden, von denen eine eine Master-Basisstation (MC BTS) ist und die anderen Slave-MCN-Basisstationen (SC BTS₁, ..., SC BTSₖ) sind;
wobei das Verfahren weiterhin umfasst, dass:
die Master-Basisstation (MC BTS) ein mit einem orthogonalen Code (BTS_ReqToFCode) codiertes Anforderungssignal sendet und die Zeit (t_ResponseRequest) des Sendens des mit einem orthogonalen Code (BTS_ReqToFCode) codierten Anforderungssignals aus einer Zählereinheit ausliest;
jede der Slave-MCN-Basisstationen (SC BTS₁, ..., SC BTSₖ) ihr individuelles Antwortsignal, das mit einem orthogonalen Code (BTS_ToFCode_i) codiert ist, beim Empfang des mit einem orthogonalen Code (BTS_ReqToFCode) codierten Anforderungssignals sendet;
die Master-Basisstation (MC BTS) die mit orthogonalen Codes (BTS_ToFCode_i) codierten Antwortsignale von den Slave-MCN-Basisstationen (SC BTS₁, ..., SC BTSₖ) empfängt;
eine Verarbeitungseinheit der Master-Basisstation (MC BTS) die Ankunftszeiten (t_Response_1, ..., t_Response_k) der mit orthogonalen Codes (BTS_ToFCode_i) codierten Antwortsignale beim Empfang dieser Signale bestimmt, und die Umlaufzeiten und aus den Umlaufzeiten die Laufzeiten (t_ToF_BTS_1, ... t_ToF_BTS_k) der mit orthogonalen Codes (BTS_ToFCode_i) codierten Antwortsignale auf der Grundlage der Zeit (t_ResponseRequest) des Sendens des mit einem orthogonalen Code (BTS_ReqToFCode) codierten Anforderungssignals und der bestimmten Ankunftszeiten (t_Response_1, ..., t_Response_k) der mit orthogonalen Codes (BTS_ToFCode_i) codierten empfangenen Antwortsignale berechnet;
und wobei das Verfahren durch die folgenden Schritte gekennzeichnet ist:
jede der Slave-MCN-Basisstationen (SC BTS₁, ..., SC BTSₖ) sendet erneut ihr individuelles Antwortsignal, das mit einem orthogonalen Code (BTS_ToFCode_i) codiert ist, nach einer vorbestimmten Zeitdauer und zu einem vorbestimmten Zeitpunkt, der durch ihre lokale Uhr angegeben wird;
die Master-Basisstation (MC BTS) empfängt die mit orthogonalen Codes (BTS_ToFCode_i) kodierten erneut gesendeten Antwortsignale;
die Verarbeitungseinheit der Master-Basisstation (MC BTS) liest den aktuellen Zählerwert (t_2ndEnvoi) der lokalen Zählereinheit der Master-Basisstation (MC BTS) nach der vorbestimmten Zeitdauer und zu dem vorbestimmten Zeitpunkt, der durch die lokale Uhr der Master-Basisstation (MC BTS) angegeben wird, bestimmt die Ankunftszeiten (t_Code-Arr_1, ..., t_CodeArr_k) der erneut gesendeten Antwortsignale, die mit orthogonalen Codes (BTS_ToFCode_i) codiert sind, beim Empfang dieser Signale mittels der Zählereinheit der MCN-Master-Basisstationen (MC BTS), subtrahiert den Zählerwert (t_2ndEnvoi) der lokalen Zählereinheit der Master-Basisstation (MC BTS), der zu dem durch die Uhr der Master-Basisstation (MC BTS) angegebenen vorbestimmten Zeitpunkt gelesen wird, und die berechneten Laufzeiten (t_ToF_BTS_1, ..., t_ToF_BTS_k) der mit orthogonalen Codes (BTS_ToFCode_i) codierten Antwortsignale von den bestimmten Ankunftszeiten (t_Code-Arr_1, .., t_CodeArr_k) der mit orthogonalen Codes (BTS_ToFCode_i) codierten erneut gesendeten Antwortsignale, um individuelle Zeitdifferenzen zwischen der Uhr der Master-Basisstation (MC BTS) und der Uhr jeder der Slave-MCN-Basisstationen (SC BTS₁, ..., SC BTSₖ) zu erhalten; und
die Master-Basisstation (MC BTS) senden zu jeder der Slave-MCN-Basisstationen (SC BTS₁, ..., SC BTSₖ) Daten, die die erhaltene Zeitdifferenz zwischen der Uhr der Master-Basisstation (MC BTS) und der Uhr der jeweiligen Slave-Basisstation (SC BTS₁, ..., SC BTSₖ) darstellen; und
jede der Slave-MCN-Basisstationen (SC BTS₁, ..., SC BTSₖ) empfängt die Daten, die die erhaltene Zeitdifferenz zwischen der Uhr der Master-Basisstation (MC BTS) und der Uhr der Slave-Basisstation (SC BTS₁, ..., SC BTSₖ) darstellen und korrigiert ihre Uhr auf der Grundlage dieses Signals.

## Revendications

1. Pluralité de stations de base de réseau de communication mobile, MCN (Mobile Communication Network), (100) dont chacune comprend
une première unité de réception (4) configurée pour recevoir un premier signal codé avec un premier code orthogonal issu d'une autre station de base MCN ou d'un dispositif mobile ;
une unité de localisation et de positionnement/minutage (2, 20) configurée pour a) traiter, pour localiser le dispositif mobile, le premier signal codé avec le premier code orthogonal comprenant une détermination de l'heure d'arrivée du premier signal à la station de base MCN et b) fournir, pour localiser le dispositif mobile, un deuxième signal codé avec un deuxième code orthogonal ; et
une première unité de transmission (8) configurée pour transmettre le deuxième signal codé avec le deuxième code orthogonal ;
les stations de base MCN formant un agrégat de stations de base MCN, dont l'une étant une station de base maître (MC BTS) les autres étant des stations de base MCN esclave (SC BTS₁, ..., SC BTSₖ) ; dans laquelle
la station de base maître (MC BTS) est configurée pour transmettre un signal de demande codé avec un code orthogonal (BTS_ReqToFCode) et lire l'heure (t_ResponseRequest) de transmission du signal de demande codé avec un code orthogonal (BTS_ReqToFCode) depuis une unité de compteur ;
dans laquelle la pluralité de stations de base de réseau de communication mobile est **caractérisée en ce que** :
chacune des stations de base MCN esclave (SC BTS₁, ..., SC BTSₖ) est configurée pour transmettre son signal de réponse individuel codé avec un code orthogonal (BTS_ToFCode_i) sur réception du signal de demande codé avec un code orthogonal (BTS_ReqToFCode) ;
la station de base maître (MC BTS) est configurée pour recevoir les signaux de réponse codés avec des codes orthogonaux (BTS_ToFCode_i) des stations de base MCN esclave (SC BTS₁, ..., SC BTSₖ) ;
la station de base maître (MC BTS) comprend une unité de traitement configurée pour
déterminer les heures d'arrivée (t_Response_1, ..., t_Response_k) des signaux de réponse codés avec des codes orthogonaux (BTS_ToFCode_i) sur réception de ces signaux ;
calculer les durées d'aller-retour, et à partir des durées d'aller-retour, les durées de trajet (t_ToF_BTS_1, ..., t_ToF_BTS_k) des signaux de réponse codés avec des codes orthogonaux (BTS_ToFCode_i) selon l'heure (t_ResponseRequest) de transmission du signal de demande codé avec un code orthogonal (BTS_ReqToFCode) et les heures d'arrivée déterminées (t_Response_1, ..., t_Response_k) des signaux de réponse reçus codés avec des codes orthogonaux (BTS_ToFCode_i) ;
et dans laquelle
chacune des stations de base MCN esclave (SC BTS₁, ..., SC BTSₖ) présente sa propre unité de compteur et est configurée pour retransmettre son signal de réponse individuel codé avec un code orthogonal (BTS _ToFCode _i) après une période temporelle prédéterminée, et à un point prédéterminé dans le temps indiqué par son horloge locale ;
la station de base maître (MC BTS) est configurée pour recevoir les signaux de réponse retransmis codés avec des codes orthogonaux (BTS_ToFCode_i) ;
l'unité de traitement de la station de base maître (MC BTS) est configurée pour
lire la valeur de compteur courante (t_2ndEnvoi) de l'unité de compteur locale de la station de base maître (MC BTS) après la période temporelle prédéterminée, et au point prédéterminé dans le temps, indiqué par l'horloge locale de la station de base maître (MC BTS) ;
déterminer les heures d'arrivée (t_CodeArr_1, ..., t_CodeArr_k) des signaux de réponse retransmis codés avec des codes orthogonaux (BTS_ToFCode_i) sur réception de ces signaux au moyen de l'unité de compteur des stations de base MCN maître (MC BTS) ;
soustraire la valeur de compteur (t_2ndEnvoi) de l'unité de compteur locale de la station de base maître (MC BTS) lue au point prédéterminé dans le temps indiqué par l'horloge de la station de base maître (MC BTS) et les durées de trajet calculées (t_ToF_BTS_1, ..., t_ToF_BTS_k) des signaux de réponse codés avec des codes orthogonaux (BTS_ToFCode_i) des heures d'arrivée déterminées (t_CodeArr_1, ..., t_CodeArr_k) des signaux de réponse retransmis codés avec des codes orthogonaux (BTS_ToFCode_i) afin d'obtenir des différences temporelles individuelles entre l'horloge de la station de base maître (MC BTS) et l'horloge de chacune des stations de base MCN esclave (SC BTS₁, ..., SC BTSₖ) ; et dans laquelle
la station de base maître (MC BTS) est configurée pour transmettre à chacune des stations de base MCN esclave (SC BTS₁, ..., SC BTSₖ) des données représentant la différence temporelle obtenue de l'horloge de la station de base maître (MC BTS) et l'horloge de la station de base esclave respective (SC BTS₁, ..., SC BTSₖ) ; et
chacune des stations de base MCN esclave (SC BTS₁, ..., SC BTSₖ) est configurée pour recevoir les données représentant la différence temporelle obtenue de l'horloge de la station de base maître (MC BTS) et l'horloge des stations de base esclave (SC BTS₁, ..., SC BTSₖ) et corriger son horloge selon ce signal.

2. La pluralité de stations de base MCN (100) selon la revendication 1, dans laquelle dans chacune de la pluralité de stations de base MCN (100) :
la première unité de réception (4) est configurée en outre pour recevoir des premiers signaux de communication du dispositif mobile ;
et chacune des stations de base MCN (100) comprend en outre
une unité de communication (3) configurée pour traiter les premiers signaux de communication reçus par la première unité de réception (4) ou des deuxièmes signaux de communication à transmettre au dispositif mobile via la première unité de transmission (8) ; et
une unité de traitement de signal (5) configurée pour recevoir le premier signal codé avec un premier code orthogonal de la première unité de réception (4) et fournir le premier signal codé avec un premier code orthogonal à l'unité de localisation et de positionnement/minutage (2, 20), en particulier, sans égalisation du premier signal codé avec un premier code orthogonal.

3. La pluralité de stations de base MCN (100) selon la revendication 1, dans laquelle des stations de base MCN (100) comprend en outre
une deuxième unité de réception différente de la première unité de réception (4) et configurée pour recevoir des premiers signaux de communication du dispositif mobile ; et
une deuxième unité de transmission différente de la première unité de transmission (8) et configurée pour transmettre des deuxièmes signaux de communication au dispositif mobile.

4. Procédé de localisation d'un dispositif mobile, MD (Mobile Device), dans un réseau de communication mobile, comprenant une communication de signaux codés avec des codes orthogonaux entre le dispositif mobile (MD) et au moins trois stations de base, BS (Base Station), de réseau de communication mobile, MCN (Mobile Communication Network), de la pluralité de stations de base MCN selon la revendication 1 ; et
un traitement des signaux communiqués par le dispositif mobile (MD) et/ou les au moins trois stations de base (BS) MCN pour localiser le dispositif mobile (MD) dans lequel le traitement comprend une détermination de l'heure d'arrivée d'au moins un des signaux communiqués, dans lequel les au moins trois stations de base de réseau de communication mobile, MCN (Mobile Communication Network), forment un agrégat de stations de base MCN, dont l'une étant une station de base maître (MC BTS) les autres étant des stations de base MCN esclave (BTS1, ..., BTSk) ;
dans lequel le procédé comprend en outre :
la station de base maître (MC BTS) transmet un signal de demande codé avec un code orthogonal (BTS_ReqToFCode) et lire l'heure (t_ResponseRequest) de transmission du signal de demande codé avec un code orthogonal (BTS_ReqToFCode) depuis une unité de compteur ;
chacune des stations de base MCN esclave (BTS1, ..., BTSk) transmet son signal de réponse individuel codé avec un code orthogonal (BTS_ToFCode_i) sur réception du signal de demande codé avec un code orthogonal (BTS_ReqToFCode) ;
la station de base maître (MC BTS) reçoit les signaux de réponse codés avec des codes orthogonaux (BTS_ToFCode_i) des stations de base MCN esclave (SC BTS1, ..., SC BTSk) ;
une unité de traitement de la station de base maître (MC BTS) détermine les heures d'arrivée (t_Response_1, ..., t_Response_k) des signaux de réponse codés avec des codes orthogonaux (BTS_ToFCode_i) sur réception de ces signaux, et calcule les durées d'aller-retour, et à partir des durées d'aller-retour, les durées de trajet (t_ToF_BTS_1, ..., t_ToF_BTS_k) des signaux de réponse codés avec des codes orthogonaux (BTS_ToFCode_i) selon l'heure (t_ResponseRequest) de transmission du signal de demande codé avec un code orthogonal (BTS_ReqToFCode) et les heures d'arrivée déterminées (t_Response_1, ..., t_Response_k) des signaux de réponse reçus codés avec des codes orthogonaux (BTS_ToFCode_i) ;
le procédé étant caractérisé en les étapes suivantes :
chacune des stations de base MCN esclave (SC BTS1, ..., SC BTSk) retransmet son signal de réponse individuel codé avec un code orthogonal (BTS_ToFCode_i) après une période temporelle prédéterminée, et à un point prédéterminé dans le temps indiqué par son horloge locale ;
la station de base maître (MC BTS) reçoit les signaux de réponse retransmis codés avec des codes orthogonaux (BTS_ToFCode_i) ;
l'unité de traitement de la station de base maître (MC BTS) lit la valeur de compteur courante (t_2ndEnvoi) de l'unité de compteur local de la station de base maître (MC BTS) après la période temporelle prédéterminée, et au point prédéterminé dans le temps, indiquée par l'horloge locale de la station de base maître (MC BTS), détermine les heures d'arrivée (t_CodeArr_1, ..., t_CodeArr_k) des signaux de réponse retransmis codés avec des codes orthogonaux (BTS_ToFCode_i) sur réception de ces signaux au moyen de l'unité de compteur des stations de base MCN maître (MC BTS), soustrait la valeur de compteur (t_2ndEnvoi) de l'unité de compteur locale de la station de base maître (MC BTS) lue au point prédéterminé dans le temps indiqué par l'horloge de la station de base maître (MC BTS) et les durées de trajet calculées (t_ToF_BTS_1, ..., t_ToF_BTS_k) des signaux de réponse codés avec des codes orthogonaux (BTS _ToFCode _i) des heures d'arrivée déterminées (t_CodeArr_1, ..., t_CodeArr_k) des signaux de réponse retransmis codés avec des codes orthogonaux (BTS_ToFCode_i) afin d'obtenir des différences temporelles individuelles entre l'horloge de la station de base maître (MC BTS) et l'horloge de chacune des stations de base MCN esclave (SC BTS1, ..., SC BTSk) ;
et la station de base maître (MC BTS) transmet à chacune des stations de base MCN esclave (SC BTS1, ..., SC BTSk) des données représentant la différence temporelle obtenue de l'horloge de la station de base maître (MC BTS) et l'horloge de la station de base esclave respective (SC BTS1, ..., SC BTSk) ;
et chacune des stations de base MCN esclave (SC BTS1, ..., SC BTSk) reçoit les données représentant la différence temporelle obtenue de l'horloge de la station de base maître (MC BTS) et l'horloge des stations de base esclave (SC BTS1, ..., SC BTSk) et corrige son horloge selon ce signal.
